# EUROPÄISCHE PATENTSCHRIFT

(11) **EP 2 657 595 B1**
(45) Veröffentlichungstag und Bekanntmachung des Hinweises auf die Patenterteilung: **06.06.2018**
(21) Anmeldenummer: 13161944.7
(22) Anmeldetag: 02.04.2013
(51) Int. Cl.: F21V 15/01, F16B 7/00

(54) **Eckverbinder für einen Rahmen einer Leuchte, Rahmen einer Leuchte und Leuchte**
Corner connector for a frame of a luminaire, frame of a luminaire and luminaire
Raccord d'angle pour un cadre d'un éclairage, cadre et éclairage

(30) Priorität: 05.04.2012 DE 202012101247 U
(43) Veröffentlichungstag der Anmeldung: 30.10.2013
(73) Patentinhaber: Zumtobel Lighting GmbH, 6850 Dornbirn (AT)
(72) Erfinder: Kilga, Marcel, 6840 Götzis (AT); Ilic, Tanja, 6850 Dornbirn (AT)
(74) Vertreter: Thun, Clemens

(56) Entgegenhaltungen:
- EP-A2- 0 283 689
- DE-U1-202008 013 005
- DE-U1-202009 008 694
- FR-A1- 2 260 014
- US-B1- 6 231 213

## Beschreibung

Die Erfindung betrifft eine Leuchte mit einem Rahmen, der einen Eckverbinder zur Verbindung eines ersten Profilelements des Rahmens mit einem zweiten Profilelement des Rahmens aufweist.

Aus dem Stand der Technik ist es bekannt, einen Rahmen für eine Leuchte durch vier, auf Gehrung geschnittene Metallprofile zu bilden, die mittels vier Eckverbindern miteinander verbunden sind; dabei greifen die Eckverbinder jeweils in Nuten ein, die in den Profilen ausgebildet sind.

Hierbei besteht das Problem, dass aufgrund von Toleranzen der genannten Bauteile ein Bewegungsspiel, insbesondere in einer Richtung normal zu der, durch den Rahmen festgelegten Ebene besteht, wodurch ein nicht ebenmäßiger Übergang an den Ecken entstehen kann. Hierdurch ist das äußere Erscheinungsbild des Rahmens bzw. der Leuchte beeinträchtigt. Zur Verbesserung des Erscheinungsbildes ist an den Ecken eine entsprechende Nachbearbeitung erforderlich.

Aus der EP 0 283 689 A2 ist ein Eckverbinder zur Verbindung zweier Hohlprofile bekannt, der zwei Schenkel aufweist. An den Schenkeln sind Rückhaltenasen ausgebildet, die sowohl seitlich, als auch nach oben abgebogen sind.

Weitere Eckverbinder mit an den Schenkeln ausgebildeten Rückhalteelementen sind aus den Schriften FR 2 260 014 A1, DE 20 2009 008 694 U1 und DE 20 2008 013 005 U1 bekannt. Die Schrift US 6,231,213 B1 zeigt ein Eckverstärkungsteil für ein Türelement.

Der Erfindung liegt die Aufgabe zugrunde, eine entsprechende verbesserte Leuchte anzugeben; insbesondere soll sich dabei das genannte Problem vermeiden lassen. Zudem soll sich der Eckverbinder bzw. der Rahmen einfach herstellen und montieren lassen.

Diese Aufgabe wird gemäß der Erfindung mit dem in dem unabhängigen Anspruch angegebenen Gegenstand gelöst. Besondere Ausführungsarten der Erfindung sind in den abhängigen Ansprüchen angegeben.

Gemäß der Erfindung ist eine Leuchte, insbesondere eine Rettungszeichenleuchte mit einem Rahmen vorgesehen, der ein erstes Profilelement mit einer ersten Nut aufweist, ein zweites Profilelement mit einer zweiten Nut und einen Eckverbinder, wobei die beiden Profilelemente durch den Eckverbinder verbunden sind. Die beiden Profilelemente bestehen vorzugsweise aus Aluminium.

Der Eckverbinder weist dabei einen ersten Schenkel auf, der sich längs einer ersten Längsachse erstreckt und der dazu ausgebildet ist, in eine erste Nut des ersten Profilelements eingesteckt zu werden, sowie einen zweiten Schenkel, der sich längs einer zweiten Längsachse erstreckt und der dazu ausgebildet ist, in eine zweite Nut des zweiten Profilelements eingesteckt zu werden. Der erste Schenkel weist dabei eine erste Lasche auf, die mit Bezug auf die erste Längsachse ausgebogen ist und der zweite Schenkel eine zweite Lasche, die mit Bezug auf die zweite Längsachse ausgebogen ist.

Durch die beiden ausgebogenen Laschen lässt sich erzielen, dass nach der Verbindung der beiden Profilelemente mit dem Eckverbinder praktisch kein Bewegungsspiel zwischen diesen Bauteil gegeben ist. Die beiden Profilelemente können somit praktisch ohne gegenseitigen Versatz ausgerichtet werden.

Vorzugsweise ist der Eckverbinder derart gestaltet, dass die erste Lasche und die zweite Lasche mit Bezug auf eine Ebene, die durch die erste Längsachse und die zweite Längsachse aufgespannt ist, auf derselben Seite angeordnet sind. Hierdurch eignet sich der Eckverbinder besonders zur Verbindung, wenn die beiden Profilelemente dasselbe Profil bzw. denselben Querschnitt aufweisen.

Vorzugsweise ist der Eckverbinder derart gestaltet, dass die erste Lasche gegenüber dem restlichen ersten Schenkel federnd ausgebildet ist. Hierdurch ist eine besonders einfache Montage bei zuverlässiger Begrenzung bzw. Aufhebung des Bewegungsspiels ermöglicht.

Vorzugsweise sind der erste Schenkel und der zweite Schenkel aus Stahl gebildet; hierdurch sind herstellungstechnisch einfach besonders geeignete, entsprechende mechanische Eigenschaften der Laschen erzielbar. Weiterhin vorteilhaft besteht der Eckverbinder aus Stahl.

Herstellungstechnisch vorteilhaft ist erste Lasche durch einen L-förmigen Freischnitt in bzw. an dem ersten Schenkel gebildet.

Erfindungsgemäß ist die erste Lasche relativ zu einer Ebene ausgebogen, die durch die erste Längsachse und die zweite Längsachse festgelegt bzw. aufgespannt ist. Hierdurch ist eine besonders effektive Begrenzung des Bewegungsspiels erzielbar. Vorteilhaft ist die Lasche hierbei um einen ersten Winkel ausgebogen, der zwischen 2° und 10° beträgt.

Weiterhin vorzugsweise ist die erste Lasche außerdem derart ausgebogen, dass ihre Projektion auf die Ebene mit der ersten Längsachse einen zweiten Winkel einschließt, der insbesondere zwischen 5° und 30° beträgt. Hierdurch lässt sich die Stabilität der Verbindung zwischen dem Eckverbinder und dem ersten Profilelement weiterhin steigern.

Eine weiterhin besonders gute Stabilität und Ausrichtung lässt sich erzielen, wenn - wie erfindungsgemäß vorgesehen - der erste Schenkel außerdem eine weitere Lasche aufweist, die lediglich parallel zu der Ebene ausgebogen ist. Dabei ist die weitere Lasche erfindungsgemäß an dem ersten Schenkel mit Bezug auf die erste Längsachse der ersten Lasche gegenüberliegend ausgebildet.

Eine besonders einfache Montage lässt sich erzielen, wenn der Eckverbinder außerdem eine Richtungs-Markierung zur Anzeige einer Richtung normal zu der Ebene aufweist. Auf diese Weise lässt sich der Eckverbinder und weitere, analog gebildete Eckverbinder des Rahmens besonders einfach mit Bezug auf die Ebene jeweils gleich ausrichten.

Insbesondere weist der Rahmen weiterhin ein drittes Profilelement mit einer dritten Nut auf, ein viertes Profilelement mit einer vierten Nut und einen weiteren Eckverbinder zur Verbindung des dritten Profilelements mit dem vierten Profilelement, wobei das dritte Profilelement und das vierte Profilelement analog zu dem ersten Profilelement und dem zweiten Profilelement gestaltet sind und der weitere Eckverbinder analog zu dem zuerst genannten Eckverbinder.

Die Erfindung wird im Folgenden anhand eines Ausführungsbeispiels und mit Bezug auf die Zeichnungen näher erläutert. Es zeigen:
- Fig. 1: einen Eckbereich eines erfindungsgemäßen Rahmens,
- Fig. 2: einen erfindungsgemäßen Eckverbinder, eingesteckt in einen Endbereich eines Profilelements des Rahmens,
- Fig. 3: eine weitere Ansicht des Eckverbinders und des Profilelements aus einer anderen Richtung,
- Figuren 4 und 5: zwei Ansichten des Eckverbinders aus unterschiedlichen Perspektiven,
- Fig. 6: eine Skizze des Eckverbinders, betrachtet normal zu der Ebene, die durch die beiden Schenkel des Eckverbinders aufgespannt ist und
- Fig. 7: eine Skizze zu einem Bauteil, aus dem durch Biegungen der Eckverbinder gebildet werden kann.

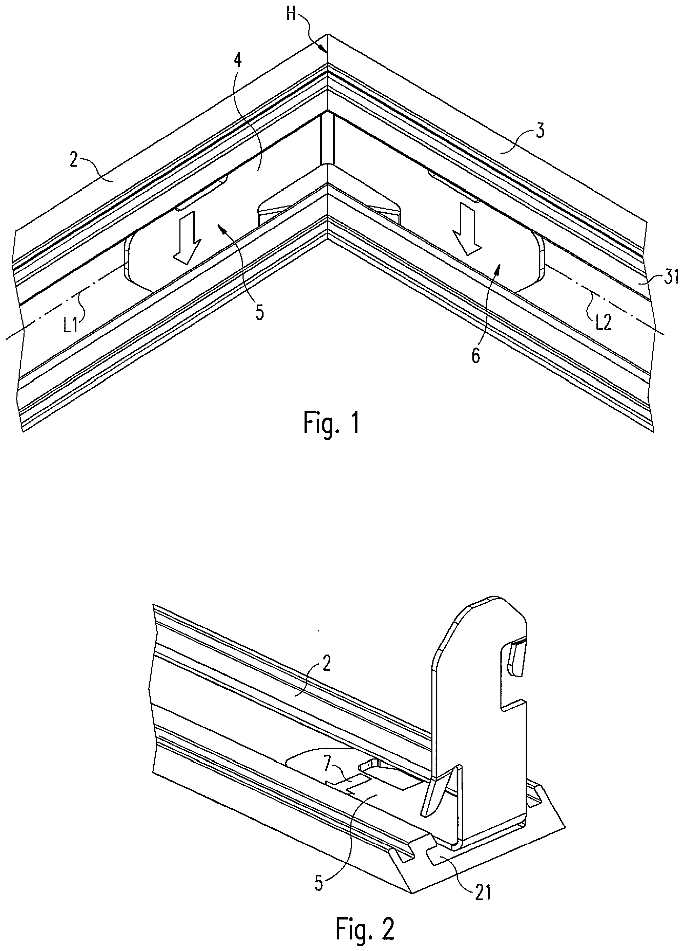

Fig. 1 zeigt eine perspektivische Sicht auf einen Eckbereich eines erfindungsgemäßen Rahmens. Der Rahmen eignet sich insbesondere zur Bildung einer Leuchte, beispielsweise einer Hinweisleuchte bzw. Rettungszeichenleuchte.

Der Rahmen weist ein erstes Profilelement 2, ein zweites Profilelement 3 und einen Eckverbinder 4 auf. Insgesamt kann der Rahmen insbesondere aus vier Profilelementen und vier Eckverbindern bestehen, die jeweils analog gebaut sind, so dass hier im Folgenden lediglich ein entsprechender Eckbereich entsprechend beschrieben wird. Der Rahmen kann dementsprechend insgesamt beispielsweise rechteckig oder quadratisch sein.

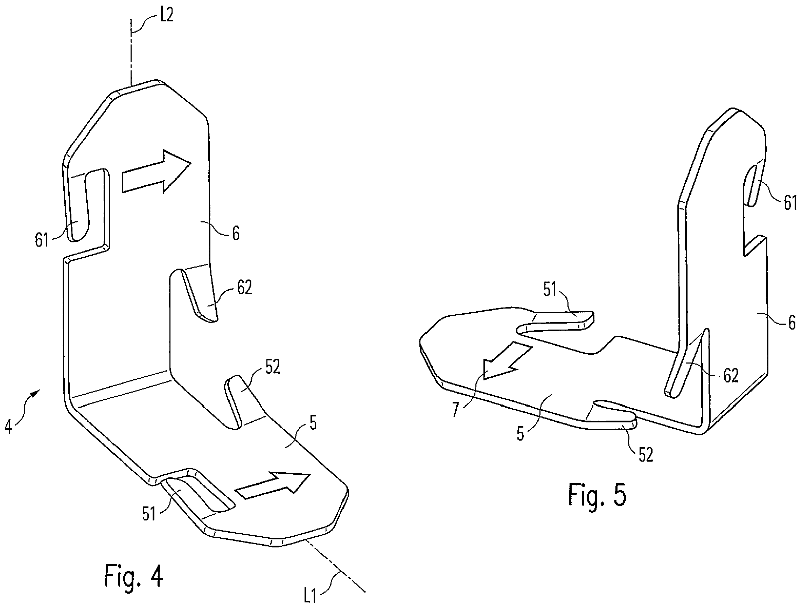

Der Eckverbinder 4 ist zur Verbindung des ersten Profilelements 2 mit dem zweiten Profilelement 3 ausgestaltet, insbesondere derart, dass sich das erste Profilelement 2 und das zweite Profilelement 3 lediglich unter Nutzung des Eckverbinders 4 zur Bildung des Rahmens verbinden lassen. In den Figuren 4 und 5 ist der Eckverbinder 4 aus unterschiedlichen Richtungen in separierter Form skizziert. Der Eckverbinder 4 weist einen ersten Schenkel 5 und einen zweiten Schenkel 6 auf, wobei sich der erste Schenkel 5 längs einer ersten Längsachse *L1* erstreckt und der zweite Schenkel 6 längs einer zweiten Längsachse *L2*.

Insbesondere kann der Eckverbinder 4 ein abgewinkeltes Element darstellen, derart, dass die beiden Schenkel 5, 6 lediglich über eine Biegelinie voneinander getrennt sind. Hierdurch lässt sich der Rahmen besonders schmal gestalten. Dies ist beispielsweise im Fall einer Hinweis- bzw. Rettungszeichenleuchte besonders vorteilhaft.

Vorzugsweise ist die Gestaltung derart, dass das erste Profilelement 2 und das zweite Profilelement 3 dazu ausgebildet sind, derart verbunden zu werden, dass sie sich unmittelbar kontaktieren. Hierzu sind die entsprechenden, zueinander weisenden Endbereiche der beiden Profilelemente 2, 3 vorzugsweise auf Gehrung geschnitten, wie in Fig. 1 an der mit *H* bezeichneten Stelle angedeutet.

In Fig. 2 ist der Eckverbinder 4 wie vorgesehen mit dem ersten Profilelement 2 verbunden gezeigt, jedoch ohne das zweite Profilelement. Hier ist der auf Gehrung geschnittene Endbereich des ersten Profilelements 2 gut erkennbar.

Der erste Schenkel 5 ist dazu ausgebildet, in eine erste Nut 21 des ersten Profilelements 2 eingesteckt zu werden, der zweite Schenkel 6 dazu, in eine zweite Nut 31 des zweiten Profilelements 3 eingesteckt zu werden.

Der erste Schenkel 5 weist eine erste Lasche 51 auf, die mit Bezug auf die erste Längsachse *L1* ausgebogen ist. Durch die so ausgebogene erste Lasche 51 kann das Toleranzfenster der ersten Nut 21 im ersten Profilelement 2 besonders gut aufgenommen werden.

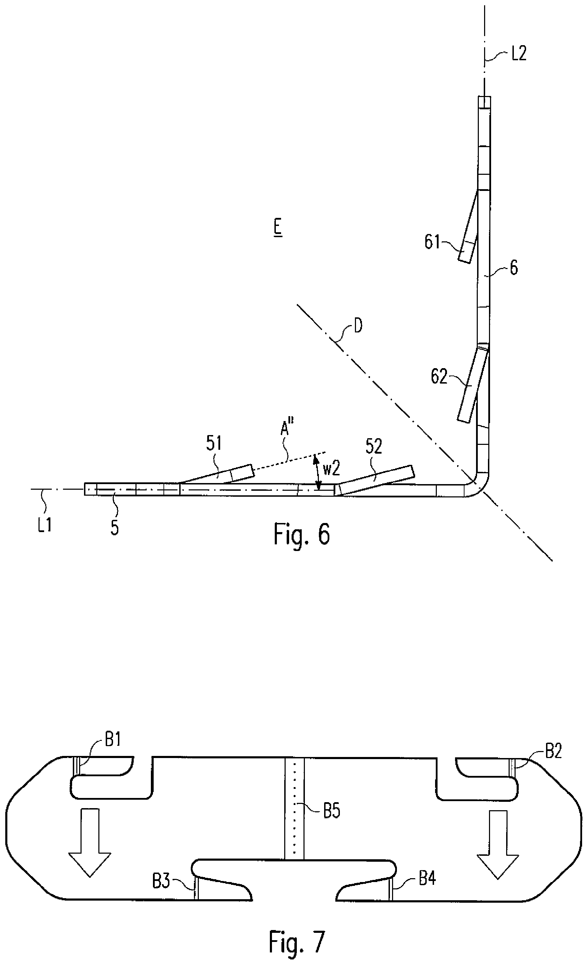

Der zweite Schenkel 6 weist eine zweite Lasche 61 auf, die mit Bezug auf die zweite Längsachse *L2* ausgebogen ist. Insbesondere können die beiden Laschen 51, 61 analog gebildet sein. Durch die beiden entsprechend ausgebogenen Laschen 51, 61 lässt sich erzielen, dass bei einer Verbindung mit den beiden Profilelementen 2, 3 kein Höhenversatz der Profilelemente 2, 3 entsteht. In Fig. 1 ist entsprechend zu erkennen, dass an der Stelle *H* das erste Profilelement 2 ohne Höhenversatz in das zweite Profilelement 3 übergeht. Mit "Höhenversatz" sei dabei eine relative unterschiedliche Erstreckung der beiden Profilelemente 2, 3 gegenüber einer Ebene E bezeichnet, die durch die erste Längsachse *L1* und die zweite Längsachse *L2* festgelegt bzw. aufgespannt ist. In Fig. 6 ist der Eckverbinder 4 normal zu dieser Ebene *E* betrachtet skizziert, d. h. die Ebene *E* ist parallel zu der Zeichenebene bzw. bildet die Zeichenebene.

Eine besonders einfache und raumsparend Gestaltung des Eckverbinders 4 ist ermöglicht, wenn der erste Schenkel 5 in erster Näherung flach gestaltet ist, so dass er sich überwiegend lediglich innerhalb einer weiteren Ebene erstreckt, die sich längs der ersten Längsachse *L1* erstreckt und die dabei normal zu derjenigen Ebene E orientiert ist, die durch die beiden Längsachsen *L1, L2* aufgespannt ist; im Fall eines rechtwinkligen Rahmens - ist diese weitere Ebene dabei vorzugsweise normal zu der zweiten Längsachse *L2* orientiert. Im gezeigten Beispiel ist auch das erste Profilelement 2 in erster Näherung flach, wobei es sich - wenn es wie vorgesehen mit dem Eckverbinder 4 verbunden ist - ebenfalls entsprechend innerhalb der weiteren Ebene erstreckt. Der zweite Schenkel 6 bzw. das zweite Profilelement 3 sind vorzugsweise analog gestaltet.

Vorzugsweise sind die erste Lasche 51, die am ersten Schenkel 5 gebildet ist und die zweite Lasche 61, die am zweiten Schenkel 6 gebildet ist, mit Bezug auf die Ebene *E* auf derselben Seite angeordnet, in Fig. 1 "oben". Hierdurch lässt sich insbesondere in dem Fall, dass die beiden Profilelemente 2, 3 dasselbe Profil bzw. denselben Querschnitt aufweisen, sicherstellen, dass beide Profilelemente 2, 3 bei ihrer Verbindung - mit Bezug auf die Ebene *E* - ohne Höhenversatz ausgerichtet werden.

Vorzugsweise ist der Eckverbinder 4 derart gestaltet, dass die erste Lasche 51 gegenüber dem restlichen ersten Schenkel 5 federnd ausgebildet ist. Auf diese Weise kann die Lasche 51 - je nach Toleranz des entsprechenden Bauteils, durch das das erste Profilelement 2 gebildet ist - mehr oder weniger "ausfedern". Herstellungstechnisch vorteilhaft lässt sich eine entsprechende federnde Eigenschaft der ersten Lasche 51 erzielen, wenn der erste Schenkel 5 aus Stahl gebildet ist. Besonders einfach lässt sich der Eckverbinder 4 gestalten, wenn der gesamte Eckverbinder 4 aus Stahl besteht.

Für die zweite Lasche 61 und den zweiten Schenkel 6 gilt entsprechendes. Vorzugsweise ist der Eckverbinder 4 insgesamt derart gestaltet, dass der erste Schenkel 5 und der zweite Schenkel 6 analog gebildet, insbesondere - wie im gezeigten Beispiel der Fall - spiegelsymmetrisch gestaltet sind.

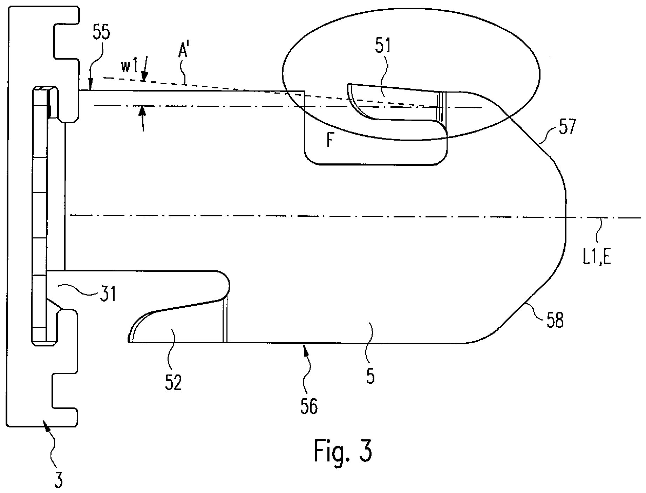

In Fig. 3 ist der Eckverbinder 4 eingesteckt in das zweite Profilelement 3, ohne das erste Profilelement 2 skizziert. Die erste Lasche 51 ist herstellungstechnisch vorteilhaft durch einen L-förmigen Freischnitt *F* gebildet. Der Freischnitt *F* ist vorzugsweise derart gestaltet, dass sich der Stamm des entsprechenden "L's" parallel zu der ersten Längsachse *L1* erstreckt. Dadurch kann die Lasche 51 insgesamt länglich sein, so dass sie sich längs einer, in Fig. 4 angedeuteten, Längsachse *A* der ersten Lasche 51 erstreckt.

Der Freischnitt *F* ist vorzugsweise derart gestaltet, dass der Stamm des "L's" von dem zweiten Schenkel 6 fortweist bzw. die Grundlinie des "L's" zu dem zweiten Schenkel 6 hin weist. Hierdurch lässt sich der erste Schenkel 5 mit der ersten Lasche 51 besonders gut in die erste Nut 21 des ersten Profilelements 2 einstecken.

Wie aus Fig. 3 weiterhin beispielhaft erkennbar, ist die erste Lasche 51 vorzugsweise relativ zu der Ebene *E* ausbogen, mit Bezug auf die Zeichnung der Fig. 3 nach "oben", insbesondere um einen ersten Winkel *w1*. Die Gestaltung ist beispielsweise derart, dass der erste Winkel *w1* von einer Projektion *A'* der Längsachse *A* der ersten Lasche 51 auf eine weitere Ebene *E'*, die senkrecht zu der zuerst genannten Ebene E orientiert ist und die sich dabei längs der ersten Längsachse *L1* erstreckt (entsprechend der Zeichenebene der Fig. 3) und der ersten Längsachse *L1* aufgespannt ist. Der erste Winkel *w1* beträgt vorzugsweise zwischen 2° und 10°, beispielsweise 5°.

Wie beispielhaft aus Fig. 6 hervorgeht, ist die erste Lasche 51 vorzugsweise außerdem derart ausgebogen, dass ihre Projektion auf die Ebene E gegenüber der ersten Längsachse *L1* ausgebogen ist, insbesondere um einen zweiten Winkel w2. Die Gestaltung ist beispielsweise derart, dass der zweite Winkel w2 von einer weiteren Projektion *A''* der ersten Lasche 51 auf die Ebene *E* und der ersten Längsachse *L1* aufgespannt ist. Der zweite Winkel *w2* kann beispielsweise zwischen 5° und 30° betragen, vorzugsweise zwischen 10° und 20°, beispielsweise 15°.

Eine besonders stabile und zuverlässige Verbindung der beiden Profilelemente 2, 3 ist weiterhin ermöglicht, wenn der Eckverbinder 4 derart gestaltet ist, dass der erste Schenkel 5 außerdem eine weitere Lasche 52 aufweist, die ausgebogen ist, vorzugsweise parallel zu der Ebene *E,* insbesondere lediglich parallel zu der Ebene *E.* Wie ist beispielhaft in Fig. 6 skizziert, kann die weitere Lasche 52 parallel zu der Ebene *E* ebenfalls um den Winkel *w2* ausgebogen sein. Vorteilhaft ist die weitere Lasche 52 an dem ersten Schenkel 5 mit Bezug auf die erste Längsachse *L1* der ersten Lasche 51 gegenüberliegend ausgebildet.

Wie im gezeigten Beispiel der Fall, kann der Eckverbinder 4 also insgesamt vier Laschen aufweisen, wobei jeder der zwei Schenkel 5, 6 jeweils zwei Laschen aufweist und die Gestaltung der Schenkel 5, 6 spiegelsymmetrisch mit Bezug auf eine, in Fig. 6 bezeichnete und zur Ebene *E* rechtwinklig orientierte, Spiegelebene *D* ist. Der zweite Schenkel 6 weist dementsprechend vorteilhaft ebenfalls eine entsprechend gebildete weitere Lasche 62 auf.

Wie beispielhaft in Fig. 3 gezeigt, weist der erste Schenkel 5 vorteilhaft einen Oberkantenbereich 55 auf und einen Unterkantenbereich 56, wobei der Oberkantenbereich 55 und der Unterkantenbereich 56 jeweils parallel zu der ersten Längsachse *L1* orientiert ausgebildet sind. Der L-förmige Freischnitt *F* ist dabei vorteilhaft an dem Oberkantenbereich 5 ausgebildet, so dass die erste Lasche 51 derart ausgebogen ist, dass sie sich mit Bezug auf die Ebene E über das Niveau des Oberkantenbereichs 55 hinaus erstreckt.

Die weitere Lasche 52 ist jedoch vorteilhaft lediglich parallel zu der Ebene *E* ausgebogen, so dass sie sich nicht unter das Niveau des Unterkantenbereichs 56 hinaus erstreckt. Auf diese Weise eignet sich der Unterkantenbereich 56 besonders gut zur länglichen Anlage an eine entsprechende Innenseite der ersten Nut 21, so dass mit Bezug auf die Ebene *E* eine besonders stabile Ausrichtung des ersten Profilelements 2 gegenüber dem Eckverbinder 4 ermöglicht ist. Durch den Unterkantenbereich 56 kann dementsprechend eine "Referenzkante" gebildet sein.

Um ein besonders einfaches Einstecken des ersten Schenkels 5 in die erste Nut 21 zu ermöglichen, weist der erste Schenkel 5 weiterhin vorteilhaft eine erste Anlaufschräge 57 auf. Die Anlaufschräge 57 ist vorzugsweise derart gestaltet, dass sie lediglich über eine Abrundung in den Oberkantenbereich 55 übergeht. Außerdem weist der erste Schenkel 5 vorteilhaft eine insbesondere analog ausgebildete zweite Anlaufschräge 58 auf, die vorzugsweise entsprechend in den Unterkantenbereich 56 übergeht.

In Fig. 7 ist ein Bauteil, beispielsweise aus Stahl, skizziert, das herstellungstechnisch vorteilhaft durch Biegungen zu dem Eckverbinder 4 geformt werden kann. Dabei kann durch eine erste Biegung längs einer ersten Biegelinie *B1* die entsprechend ausgebogene erste Lasche 51 gebildet werden und durch eine entsprechende zweite Biegung längs einer zweiten Biegelinie *B2* die zweite Lasche 61. Durch eine dritte Biegung längs einer dritten Biegelinie *B3* lässt sich die weitere Lasche 52 des ersten Schenkels 5 bilden und durch eine entsprechende vierte Biegung längs einer vierten Biegelinie *B4* die dazu symmetrische weitere Lasche 62 des zweiten Schenkels 6. Durch eine fünfte Biegung längs einer fünften Biegeline *B5* lassen sich die beiden Schenkel in ihre vorgesehene Relativ-Orientierung biegen.

Vorteilhaft umfasst der Rahmen außer dem ersten Profilelement 2 und dem zweiten Profilelement 3 noch wenigstens ein weiteres Profilelement, insbesondere ein drittes Profilelement und ein viertes Profilelement. Herstellungstechnisch vorteilhaft sind alle Profilelemente des Rahmens mit demselben Profil bzw. derselben Querschnittfläche ausgebildet.

Im Fall eines rechteckigen Rahmens sind dementsprechend insgesamt genau vier Profilelemente vorgesehen, zu deren Verbindung der Eckverbinder 4 und drei weitere, analog, insbesondere baugleich gestaltete Eckverbinder dienen.

Zur Montage lassen sich die Eckverbinder des Rahmens besonders einfach ausrichten, wenn der Eckverbinder 4 und die weiteren Eckverbinder eine Richtungs-Markierung 7, beispielsweise in Form eines Richtungspfeils, zur Anzeige einer Richtung normal zu der Ebene *E* aufweisen. Die Richtungs-Markierung ist vorteilhaft durch Einprägen gebildet.

## Patentansprüche

1. Leuchte, insbesondere Rettungszeichenleuchte, mit einem Rahmen, der ein erstes Profilelement (2) mit einer ersten Nut (21) aufweist, ein zweites Profilelement (3) mit einer zweiten Nut (31) und einen Eckverbinder (4), wobei die beiden Profilelemente (2, 3) durch den Eckverbinder (4) verbunden sind,
wobei der Eckverbinder (4) einen ersten Schenkel (5) aufweist, der sich längs einer ersten Längsachse (*L1*) erstreckt und der dazu ausgebildet ist, in eine erste Nut (21) des ersten Profilelements (2) eingesteckt zu werden und einen zweiten Schenkel (6), der sich längs einer zweiten Längsachse (*L2*) erstreckt und der dazu ausgebildet ist, in eine zweite Nut (31) des zweiten Profilelements (3) eingesteckt zu werden,
wobei der erste Schenkel (5) eine erste Lasche (51) aufweist, die mit Bezug auf die erste Längsachse (*L1*) ausgebogen ist und der zweite Schenkel (6) eine zweite Lasche (61), die mit Bezug auf die zweite Längsachse (*L2*) ausgebogen ist, wobei die erste Lasche (51) relativ zu einer Ebene (*E*) ausgebogen ist, die durch die erste Längsachse (*L1*) und die zweite Längsachse *(L2)* festgelegt ist, **dadurch gekennzeichnet, dass** der erste Schenkel (5) außerdem eine weitere Lasche (52) aufweist, die lediglich parallel zu der Ebene (*E*) ausgebogen ist,
wobei die weitere Lasche (52) an dem ersten Schenkel (5) mit Bezug auf die erste Längsachse (*L1*) der ersten Lasche (51) gegenüberliegend ausgebildet ist.

2. Leuchte nach Anspruch 1,
bei der der Eckverbinder (4) derart gestaltet ist, dass die erste Lasche (51) und die zweite Lasche (61) mit Bezug auf eine Ebene (*E*), die durch die erste Längsachse (*L1*) und die zweite Längsachse *(L2)* aufgespannt ist, auf derselben Seite angeordnet sind.

3. Leuchte nach Anspruch 1 oder 2,
bei der der Eckverbinder (4) derart gestaltet ist, dass die erste Lasche (51) gegenüber dem restlichen ersten Schenkel (5) federnd ausgebildet ist.

4. Leuchte nach einem der vorhergehenden Ansprüche,
bei der der erste Schenkel (5) und der zweite Schenkel (6) aus Stahl gebildet sind, vorzugsweise der Eckverbinder (4) aus Stahl besteht.

5. Leuchte nach einem der vorhergehenden Ansprüche,
bei der die erste Lasche (51) durch einen L-förmigen Freischnitt (*F*) in dem ersten Schenkel (5) gebildet ist.

6. Leuchte nach einem der vorhergehenden Ansprüche,
bei der die erste Lasche (51) relativ zu der Ebene (*E*), die durch die erste Längsachse (*L1*) und die zweite Längsachse (*L2*) festgelegt ist, um einen ersten Winkel (*w1*) ausgebogen ist, der zwischen 2° und 10° beträgt.

7. Leuchte nach einem der vorhergehenden Ansprüche,
bei der die erste Lasche (51) außerdem derart ausgebogen ist, dass ihre Projektion auf die Ebene (*E*) mit der ersten Längsachse (*L1*) einen zweiten Winkel (*w2*) einschließt, der vorzugsweise zwischen 5° und 30° beträgt.

8. Leuchte nach einem der vorhergehenden Ansprüche,
bei der der Eckverbinder (4) weiterhin eine Richtungs-Markierung (7) zur Anzeige einer Richtung normal zu der Ebene (*E*) aufweist.

9. Leuchte nach einem der vorhergehenden Ansprüche,
bei der das erste Profilelement (2) und das zweite Profilelement (3) aus Aluminium bestehen.

10. Leuchte nach einem der vorhergehenden Ansprüche,
bei der der Rahmen weiterhin ein drittes Profilelement mit einer dritten Nut aufweist, ein viertes Profilelement mit einer vierten Nut und einen weiteren Eckverbinder zur Verbindung des dritten Profilelements mit dem vierten Profilelement, wobei das dritte Profilelement und das vierte Profilelement analog zu dem ersten Profilelement (2) und dem zweiten Profilelement (3) gestaltet sind und der weitere Eckverbinder analog zu dem zuerst genannten Eckverbinder (4).

## Claims

1. Luminaire, in particular escape sign luminaire, with a frame comprising a first profile element (2) with a first groove (21), a second profile element (3) with a second groove (31) and a corner connector (4),
wherein the two profile elements (2, 3) are connected by the corner connector (4), and wherein the corner connector (4) has a first leg (5) which extends along a first longitudinal axis (L1) and which is designed to be inserted into a first groove (21) of the first profile element (2), and a second leg (6) which extends along a second longitudinal axis (*L2*) and which is designed to be inserted into a second groove (31) of the second profiled element (3),
wherein the first leg (5) comprises a first tab (51) which is bent with respect to the first longitudinal axis (*L1*), while the second leg (6) comprises a second tab (61) which is bent with respect to the second longitudinal axis (*L2*),
wherein the first tab (51) is bent relative to a plane (*E*) defined by the first longitudinal axis (*L1*) and the second longitudinal axis (*L2*),
**characterized in that**
the first leg (5) also comprises a further tab (52) which is only bent parallel to the plane (*E*),
wherein the further tab (52) is formed opposite the first leg (5) with respect to the first longitudinal axis (*L1*) of the first tab (51).

2. Luminaire according to claim 1, wherein the corner connector (4) is so designed that the first tab (51) and the second tab (61) are arranged on the same side with respect to a plane (E) defined by the first longitudinal axis (*L1*) and the second longitudinal axis (*L2*).

3. Luminaire according to claim 1 or 2, wherein the corner connector (4) is so designed that the first tab (51) is resilient with respect to the remaining first leg (5).

4. Luminaire according to one of the preceding claims, wherein the first leg (5) and the second leg (6) are made of steel, preferably the corner connector (4) consists of steel.

5. Luminaire according to one of the preceding claims, wherein the first tab (51) is formed by an L-shaped opening (*F*) in the first leg (5).

6. Luminaire according to any one of the preceding claims, wherein the first tab (51) is bent at a first angle (*w1*) of between 2° and 10° relative to the plane (*E*) defined by the first longitudinal axis (*L1*) and the second longitudinal axis (*L2*).

7. Luminaire according to one of the preceding claims, wherein the first tab (51) is also bent so that its projection on the plane (*E*) with the first longitudinal axis (*L1*) is at a second angle (*w2*), preferably between 5° and 30°.

8. Luminaire according to any one of the preceding claims, wherein the corner connector (4) further comprises a direction mark (7) to indicate a direction normal to the plane (*E*).

9. Luminaire according to one of the preceding claims, wherein the first profile element (2) and the second profile element (3) are made of aluminum.

10. Lamp according to one of the preceding claims, wherein the frame further comprises a third profile element with a third groove, a fourth profile element with a fourth groove, and another corner connector for connecting the third profile element with the fourth profile element, wherein the third profile element and the fourth profile element are designed analogous to the first profile element (2) and the second profile element (3), while the further corner connector is designed analogous to the first-mentioned corner connector (4).

## Revendications

1. Luminaire, plus particulièrement luminaire à pictogramme, avec un châssis, qui comprend un premier élément profilé (2) avec une première rainure (21), un deuxième élément profilé (3) avec une deuxième rainure (31) et un connecteur angulaire (4), les deux éléments profilés (2, 3) étant reliés par le connecteur angulaire (4), le connecteur angulaire (4) comprenant un premier montant (5), qui s'étend le long d'un premier axe longitudinal (L1) et qui est conçu pour être enfiché dans une première rainure (21) du premier élément profilé (2) et un deuxième montant (6), qui s'étend le long d'un deuxième axe longitudinal (*L2*) et qui est conçu pour être enfiché dans une deuxième rainure (31) du deuxième élément profilé (3),
le premier montant (5) comprenant une première patte (51), qui est pliée par rapport au premier axe longitudinal (*L1*) et le deuxième montant (6) comprenant une deuxième patte (61), qui est pliée par rapport au deuxième axe longitudinal (*L2*), la première patte (51) étant pliée par rapport à un plan (*E*), qui est défini par le premier axe longitudinal (*L1*) et le deuxième axe longitudinal (*L2*),
**caractérisé en ce que**
le premier montant (5) comprend en outre une patte supplémentaire (52) qui est pliée seulement parallèlement au plan (*E*),
la patte supplémentaire (52) étant réalisée sur le premier montant (5) de manière opposée au premier axe longitudinal (*L1*) de la première patte (51).

2. Luminaire selon la revendication 1,
dans lequel le connecteur angulaire (4) est conçu de façon à ce que la première patte (51) et la deuxième patte (61) soient disposées du même côté par rapport à un plan (*E*) qui est défini par le premier axe longitudinal (*L1*) et le deuxième axe longitudinal (*L2*).

3. Luminaire selon la revendication 1 ou 2,
dans lequel le connecteur angulaire (4) est conçu de façon à ce que la première patte (51) soit réalisée de manière élastique par rapport au reste du premier montant (5).

4. Luminaire selon l'une des revendications précédentes,
dans lequel le premier montant (5) et le deuxième montant (6) sont constitués d'acier, de préférence le connecteur angulaire (4) est constitué d'acier.

5. Luminaire selon l'une des revendications précédentes,
dans lequel la première patte (51) est réalisée par une coupe libre en forme de L (*F*) dans le premier montant (5).

6. Luminaire selon l'une des revendications précédentes,
dans lequel la première patte (51) est pliée avec un premier angle (*w1*) entre 2° et 10° par rapport au plan (*E*) qui est défini par le premier axe longitudinal (*L1*) et le deuxième axe longitudinal (*L2*).

7. Luminaire selon l'une des revendications précédentes,
dans lequel la première patte (51) est en outre pliée de façon à ce que sa projection sur le plan (*E*) forme avec le premier axe longitudinal (*L1*) un deuxième angle (*w2*) de préférence entre 5° et 30°.

8. Luminaire selon l'une des revendications précédentes,
dans lequel le connecteur angulaire (4) comprend en outre un marquage de direction (7) pour l'affichage d'une direction normale par rapport au plan (E).

9. Luminaire selon l'une des revendications précédentes,
dans lequel le premier élément profilé (2) et le deuxième élément profilé (3) sont constitués d'aluminium.

10. Luminaire selon l'une des revendications précédentes,
dans lequel le châssis comprend en outre un troisième élément profilé avec une troisième rainure, un quatrième élément profilé avec une quatrième rainure et un connecteur angulaire supplémentaire pour la liaison du troisième élément profilé avec le quatrième élément profilé, le troisième élément profilé et le quatrième élément profilé étant conçus de manière analogue au premier élément profilé (2) et au deuxième élément profilé (3) et le connecteur angulaire supplémentaire étant conçu de manière analogue au premier connecteur angulaire (4) mentionné ci-dessus.
